# EUROPÄISCHE PATENTSCHRIFT

(11) **EP 3 526 611 B1**
(45) Veröffentlichungstag und Bekanntmachung des Hinweises auf die Patenterteilung: **13.11.2024**
(21) Anmeldenummer: 17784582.3
(22) Anmeldetag: 29.09.2017
(51) Int. Cl.: G01P 15/08, B60R 19/48, B60R 21/0136

(54) **VERFAHREN ZUM ANORDNEN EINER ANZAHL VON MIKROMECHANISCHEM BESCHLEUNIGUNGSSENSOREN AUF ODER IN EIN KUNSTSTOFFBAUTEIL UND ENTSPRECHENDES KUNSTSTOFFBAUTEIL**
METHOD FOR ARRANGING A NUMBER OF MICROMECHANICAL ACCELERATION SENSORS ON OR IN A PLASTIC COMPONENT, AND CORRESPONDING PLASTIC COMPONENT
PROCÉDÉ PERMETTANT DE DISPOSER UN CERTAIN NOMBRE DE CAPTEURS D'ACCÉLÉRATION MICROMÉCANIQUES SUR OU DANS UN COMPOSANT EN MATIÈRE SYNTHÉTIQUE ET COMPOSANT EN MATIÈRE SYNTHÉTIQUE CORRESPONDANT

(30) Priorität: 14.10.2016 DE 102016220068
(43) Veröffentlichungstag der Anmeldung: 21.08.2019
(73) Patentinhaber: Robert Bosch GmbH, 70442 Stuttgart (DE)
(72) Erfinder: KLEIN, Linda, 73728 Esslingen (DE); KUGLER, Andreas, 73553 Alfdorf (DE); SCHOENFELD, Daniel, 74232 Abstatt (DE)
(86) Internationale Anmeldenummer: PCT/EP2017/074820
(87) Internationale Veröffentlichungsnummer: WO 2018/069066

(56) Entgegenhaltungen:
- DE-A1- 102007 016 561
- DE-A1- 102011 004 577
- DE-A1- 102012 213 917
- DE-A1- 102012 223 704
- DE-A1- 102013 211 409
- DE-A1- 102016 106 311
- US-A1- 2009 319 212
- US-A1- 2015 362 523

## Beschreibung

Die Erfindung betrifft ein Verfahren zum Anordnen einer Anzahl von mikromechanischen Beschleunigungssensoren auf oder in ein Kunststoffbauteil, insbesondere einen Stoßfänger, und ein entsprechendes Kunststoffbauteil, insbesondere Stoßfänger.

### Stand der Technik

Obwohl auch beliebige mikromechanische Bauelemente anwendbar sind, werden die vorliegende Erfindung und die ihr zugrunde liegende Problematik anhand von mikromechanischen Beschleunigungssensoren erläutert.

Mikromechanische Beschleunigungssensoren werden für verschiedene Applikationen im Automobil- und Consumer-Bereich hergestellt. Hierbei werden die mikromechanischen Beschleunigungssensoren typischerweise als vergossene oder spritzgegossene Kunststoffteile insbesondere an Stoßfängern mittels Schraub- oder Clipverbindung, insbesondere an einer Innenseite des Stoßfängers montiert. Eine elektrische Kontaktierung erfolgt aufwendig über an einen Kabelbaum montierte Stecker. Ferner sehen sich mikromechanische Beschleunigungssensoren mit einer fortschreitenden Miniaturisierung konfrontiert, die nur bedingt über die an einen Kabelbaum montierte Stecker realisiert werden können.

Somit ist es wünschenswert, ein Verfahren zum Anordnen einer Anzahl von mikromechanischen Beschleunigungssensoren auf oder in ein Kunststoffbauteil derart weiterzuentwickeln, dass insbesondere eine Integration oder oberflächliche Montage derartiger mikromechanischer Beschleunigungssensoren kostengünstig und einfach durchgeführt werden kann.

Die DE 10142272 A1 betrifft ein Insassenschutzsystem. Das Insassenschutzsystem enthält eine zentrale Steuereinheit, an die zwei jeweils an den gegenüberliegenden Fahrzeugrändern angeordnete Beschleunigungssensoren angeschlossen sind. Des Weiteren betrifft die DE 10 2013 222 409 A1 einen Abstandssensor für ein Kraftfahrzeug, dessen Gehäuse dazu ausgebildet ist, an einem Stoßfänger des Kraftfahrzeugs befestigt zu werden. Das Gehäuse ist gleichzeitig zur Aufnahme oder Befestigung eines Crash- bzw. Beschleunigungssensors ausgebildet. In der DE 10 2012 223 704 A1 ist eine Batteriezelle offenbart, die mindestens einen Beschleunigungssensor aufweist. Aus der DE 10 2011 004 577 A1 ist ein Bauelementträger zur Verpackung von MEMS-Bauelementen bekannt. Außerdem ist in der DE 10 2012 213 917 A1 eine Bauelement-Ummantelung für Elektronikmodule für ein Steuergerät eines Fahrzeugs beschrieben. Dort wird ein Sensorelement, beispielsweise ein Drehzahlsensor, auf einem teilflexiblen Leiterplattenelement aufgebracht und mit einer Vergussmasse, beispielsweise einem Polymer, vergossen.

### Offenbarung der Erfindung

Die Erfindung schafft ein Verfahren zum Anordnen einer Anzahl von mikromechanischen Beschleunigungssensoren auf oder in ein Kunststoffbauteil, insbesondere einen Stoßfänger, nach Anspruch 1 und ein entsprechendes Kunststoffbauteil nach Anspruch 7.

Bevorzugte Weiterbildungen sind Gegenstand der jeweiligen abhängigen Ansprüche.

### Vorteile der Erfindung

Die der vorliegenden Erfindung zugrunde liegende Idee liegt insbesondere darin, mikromechanische Beschleunigungssensoren derart auf einen flexiblen Schaltungsträger fest zu positionieren, so dass ein einfaches Montieren möglich ist und ein Nachjustieren oder Ausrichten des mikromechanischen Beschleunigungssensors entfallen kann. So lassen sich insbesondere weitere Verfahrensschritte zum Montieren und Ausrichten des mikromechanischen Beschleunigungssensors einsparen, wodurch sich Kosteneinsparpotentiale ergeben.

Gemäß der Erfindung umfasst das Verfahren zum Anordnen einer Anzahl von mikromechanischen Beschleunigungssensoren auf oder in das Kunststoffbauteil die Verfahrensschritte A, B und C. Unter "Anzahl" werden im vorliegenden Zusammenhang ein oder mehrere mikromechanische Beschleunigungssensoren verstanden.

Im Schritt A des Verfahrens wird der mikromechanische Beschleunigungssensor in oder auf einen flexiblen Schaltungsträger fest positioniert, wobei der mikromechanische Beschleunigungssensor mit einer integrierten Leiterbahnstruktur des flexiblen Schaltungsträgers kontaktiert wird. So lässt sich insbesondere aufgrund des flexiblen Schaltungsträgers der mikromechanische Beschleunigungssensor auf oder in dem Kunststoffbauteil gezielt ausrichten. Ferner handelt es sich bei dem auf dem flexiblen Schaltungsträger fest positionierten mikromechanischen Beschleunigungssensor um ein in sich funktionsfähiges Beschleunigungsmodul. So lässt sich der mikromechanische Beschleunigungssensor in oder auf dem Kunststoffbauteil platzsparend anordnen.

Im Schritt B des Verfahrens erfolgt das Umspritzen des mikromechanischen Beschleunigungssensors und des flexiblen Schaltungsträgers durch mindestens ein Polymer, wobei die integrierte Leiterbahnstruktur zumindest bereichsweise frei von dem mindestens einen Polymer bleibt,

Im Schritt C des Verfahrens werden zumindest bereichsweise der mikromechanische Beschleunigungssensor und der flexible Schaltungsträger auf oder in das Kunststoffbauteil derart angeordnet, dass die integrierte Leiterbahnstruktur des flexiblen Schaltungsträgers, welche frei von dem mindestens einen Polymer ist, zumindest teilweise frei liegt. Auf Basis einer insbesondere dünnen Ausgestaltung des flexiblen Schaltungsträgers kann insbesondere ein integrierter Einbau des mikromechanischen Beschleunigungssensors und des flexiblen Schaltungsträgers auf oder in das Kunststoffbauteil ohne zusätzlichen Platz- oder Raumbedarf einfach durchgeführt werden. Mit anderen Worten wird im Wesentlichen kein zusätzliches Einbauvolumen benötigt.

Der mikromechanische Beschleunigungssensor und der flexible Schaltungsträger können derart ausgebildet sein, dass eine ursprüngliche Dimensionierung beziehungsweise Größe des Kunststoffbauteils selbst nach Integration dieser in das Kunststoffbauteil im Wesentlichen kaum verändert ist. Das heißt, dass der mikromechanische Beschleunigungssensor und der flexible Schaltungsträger beispielsweise vollständig in dem Kunststoffbauteil integriert sein können, wobei sich eine ursprüngliche Form des Kunststoffbauteils im Wesentlichen nicht verändert.

Durch die zumindest teilweise freigelegte integrierte Leiterbahnstruktur des flexiblen Schaltungsträgers kann der mikromechanische Beschleunigungssensor einfach durch direkte Steckkontakte mit weiterer Elektronik, insbesondere Fahrzeugelektronik, verbunden beziehungsweise angeschlossen werden.

Der flexible Schaltungsträger kann insbesondere Silikone, Polyurethane, Polyimide, oder Thermoplaste umfassen. So lässt sich der flexible Schaltungsträger insbesondere einfach elastisch oder plastisch verformen, insbesondere lässt sich die integrierte Leiterbahnstruktur entsprechend plastisch verformen, wodurch im Wesentlichen der flexible Schaltungsträger an eine Geometrie bzw. Form des Kunststoffbauteils angepasst werden kann.

Gemäß der Erfindung werden im Schritt B des Verfahrens der mikromechanische Beschleunigungssensor und der flexible Schaltungsträger zumindest bereichsweise durch mindestens ein Polymer umspritzt. So lassen sich insbesondere elektrische Kontakte zwischen dem mikromechanischen Beschleunigungssensor und der integrierten Leiterbahnstruktur des flexiblen Schaltungsträgers vor äußeren Einflüssen schützen. Insbesondere können der mikromechanische Beschleunigungssensor und der flexible Schaltungsträger zumindest bereichsweise durch ein Duroplast mittels Spritzgießen oder Molden derart verkapselt werden, dass ein Anordnen auf das Kunststoffbauteil einfach durchgeführt werden kann. Das Anordnen auf das Kunststoffbauteil kann insbesondere durch einfache Clipmontage erfolgen. Gemäß einer weiteren bevorzugten Weiterbildung wird das feste Positionieren des mikromechanischen Beschleunigungssensors in oder auf den flexiblen Schaltungsträger durch Stecken, Löten, Kleben oder Flip-Chip-Montage durchgeführt. Beispielsweise kann der mikromechanische Beschleunigungssensor auf einer dem flexiblen Schaltungsträger zugewandten Seite eine BGA (Ball Grid Array) aufweisen, wodurch eine stabile und platzsparende Montage des mikromechanischen Beschleunigungssensors auf den flexiblen Schaltungsträger ermöglicht werden kann. Ein Alternative zum festen Positionieren des mikromechanischen Beschleunigungssensors in den flexiblen Schaltungsträger kann durch Stecken erfolgen. Dies ist insbesondere dadurch realisierbar, da der flexible Schaltungsträger dünn ausgebildet ist. Dies kann insbesondere durch Dünnen des flexiblen Schaltungsträgers realisiert werden. Beispielsweise kann der flexible Schaltungsträger als Folie ausgebildet sein.

Gemäß einer weiteren bevorzugten Weiterbildung wird der flexible Schaltungsträger als Folie bereitgestellt. So lässt sich der mikromechanische Beschleunigungssensor und der flexible Schaltungsträger beispielsweise beim Herstellen des Kunststoffbauteils, insbesondere des Stoßfängers, einfach insbesondere zwischen Textillagen eines faserverstärkten Kunststoffbauteils integrieren. Ferner lässt sich der flexible Schaltungsträger an eine Außenform des Kunststoffbauteils beim Anordnen auf das Kunststoffbauteil anpassen.

Gemäß einer weiteren bevorzugten Weiterbildung wird das zumindest bereichsweise Anordnen des flexiblen Schaltungsträgers in das Kunststoffbauteil mittels Liquid-Composite-Molding-Verfahren (LCM-Verfahren) durchgeführt. Alternativ kann der mikromechanische Beschleunigungssensor und der flexible Schaltungsträger mittels des LCM-Verfahrens zwischen Laminatlagen des Kunststoffbauteils bzw. eines Strukturbauteils aus faserverstärktem Kunststoff integriert werden. Hierbei werden der mikromechanische Beschleunigungssensor und der flexible Schaltungsträger vor einer Harzimprägnierung und einer nachfolgend sukzessiv erfolgenden Aushärtung (chemische Vernetzung) in einem an eine Bauteilgeometrie des Kunststoffbauteils angepassten Werkzeug zwischen den Laminatlagen, insbesondere Textillagen, des herzustellenden Kunststoffbauteils, insbesondere des Stoßfängers, positioniert und integriert.

Gemäß einer weiteren bevorzugten Weiterbildung wird das Liquid-Composite-Molding-Verfahren mittels Vacuum Assisted Resin Infusion-Verfahren (VARI-Verfahren) durchgeführt. So lassen sich der mikromechanische Beschleunigungssensor und der flexible Schaltungsträger in das Kunststoffbauteil ohne aufwendigen Anlagenaufwand und Anlageninvestitionen zumindest bereichsweise anordnen.

Gemäß einer weiteren bevorzugten Weiterbildung wird das Liquid-Composite-Molding-Verfahren mittels Resin Transfer Molding-Verfahren (RTM-Verfahren) durchgeführt. Alternativ können der mikromechanische Beschleunigungssensor und der flexible Schaltungsträger durch das RTM-Verfahren in Serienumfang in das Kunststoffbauteil mit faserverstärktem Kunststoff zumindest bereichsweise angeordnet werden.

LCM-Verfahren sind aufgrund relativ geringer Prozessdrücke und Temperaturen während des Herstellens des Kunststoffbauteils zum zumindest bereichsweisen Anordnen des mikromechanischen Beschleunigungssensors und des flexiblen Schaltungsträgers in das Kunststoffbauteil geeignet.

Bei dem zumindest bereichsweisen Anordnen des mikromechanischen Beschleunigungssensors und des flexiblen Schaltungsträgers auf oder in das Kunststoffbauteil wird die integrierte Leiterbahnstruktur des flexiblen Schaltungsträgers zumindest teilweise freigelegt, so dass ein einfaches Kontaktieren des mikromechanischen Beschleunigungssensors beispielsweise mittels Einsteckkontakte einer Auswerteelektronik durchgeführt werden kann. Gemäß eines weiteren Aspekts der vorliegenden Erfindung umfasst das Kunststoffbauteil, insbesondere der Stoßfänger, die Anzahl mikromechanischer Beschleunigungssensoren, wobei der mikromechanische Beschleunigungssensor in oder auf der integrierten Leiterbahnstruktur des flexiblen Schaltungsträgers fest positioniert ist, wobei der mikromechanische Beschleunigungssensor und der flexible Schaltungsträger durch mindestens ein ausgehärtetes Polymer umspritzt sind, wobei die integrierte Leiterbahnstruktur dabei zumindest bereichsweise frei von dem mindestens einen ausgehärteten Polymer ist.

Der mikromechanische Beschleunigungssensor und der flexible Schaltungsträger sind auf oder in dem Kunststoffbauteil zumindest bereichsweise derart angeordnet, dass die integrierte Leiterbahnstruktur des flexiblen Schaltungsträgers , welche frei von dem mindestens einen ausgehärteten Polymer ist, zumindest teilweise freiliegt.

Gemäß der Erfindung weisen der mikromechanische Beschleunigungssensor und der flexible Schaltungsträger zumindest ein ausgehärtetes Polymer auf. Mit anderen Worten werden der mikromechanische Beschleunigungssensor und der flexible Schaltungsträger vor dem zumindest bereichsweisen Anordnen in das Kunststoffbauteil mittels Spritzgießen umspritzt.

Hierbei erfolgt das feste Positionieren der Anzahl mikromechanischer Beschleunigungssensoren auf die integrierte Leiterbahnstruktur des flexiblen Schaltungsträgers vor dem Spritzgießen.

Gemäß einer weiteren bevorzugten Weiterbildung ist das Kunststoffbauteil ein faserverstärktes Kunststoffbauteil.

Gemäß einer weiteren bevorzugten Weiterbildung umfasst das Kunststoffbauteil einen faserverstärkten Kunststoff. Faserverstärkter Kunststoff eignet sich aufgrund seiner materialspezifischen Eigenschaften insbesondere zum Herstellen des hier beschriebenen Stoßfängers.

Die hier beschriebenen Merkmale für das Verfahren zum Anordnen der Anzahl von mikromechanischen Beschleunigungssensoren auf oder in das Kunststoffbauteil sind entsprechend für das Kunststoffbauteil offenbart sowie umgekehrt.

Das hier beschriebene Verfahren kann insbesondere in einer 2R2-Fertigungslinie (Reel to Reel Manufacturing Line) durchgeführt werden.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Figur 1: schematische Aufsichtsdarstellung zum Erläutern eines mikromechanischen Beschleunigungssensors gemäß der Ausführungsform der vorliegenden Erfindung;
- Figur 2: schematische Querschnittsansicht zum Erläutern des Verfahrens zum Umspritzen einer Anzahl von mikromechanischen Beschleunigungssensoren und eines flexiblen Schaltungsträgers gemäß der Ausführungsform der vorliegenden Erfindung;
- Figur 3: schematische Darstellung eines Stoßfängers zum Erläutern des Verfahrens gemäß einer weiteren Ausführungsform der vorliegenden Erfindung;
- Figur 4: Flussdiagramm zum Erläutern eines Verfahrens zum Anordnen der Anzahl von mikromechanischen Beschleunigungssensoren auf oder in das Kunststoffbauteil gemäß einer Ausführungsform der vorliegenden Erfindung;
- Figuren 5a, 5b: schematische Darstellungen zum Erläutern eines Liquid-Composite-Molding-Verfahrens, insbesondere Vacuum Assisted Resin Infusion (VARI-Verfahren); und
- Figuren 6a, 6b: schematische Darstellungen zum Erläutern einer speziellen Werkzeugtechnologie für ein LCM-Verfahren, insbesondere Resin Transfer Molding-Verfahrens (RTM-Verfahren), zum Einlegen eines Foliensystems zwischen Textillagen.

### Ausführungsformen der Erfindung

In den Figuren bezeichnen gleiche Bezugszeichen gleiche beziehungsweise funktionsgleiche Elemente.

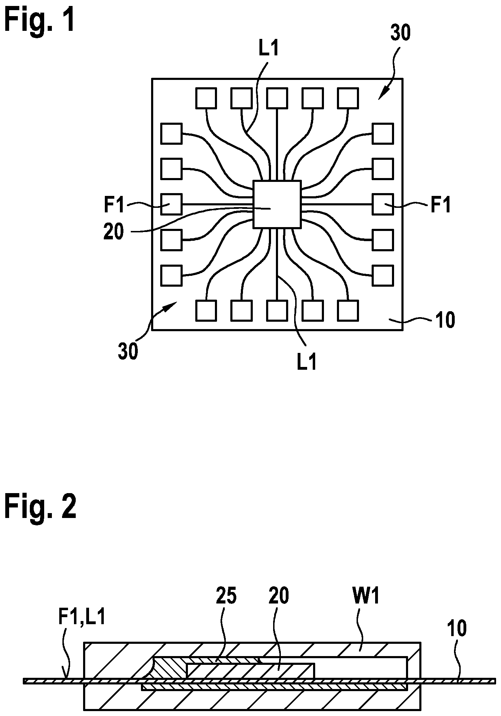

Figur 1 ist eine schematische Aufsichtsdarstellung zum Erläutern eines mikromechanischen Beschleunigungssensors gemäß der Ausführungsform der vorliegenden Erfindung.

In Figur 1 bezeichnet Bezugszeichen 20 einen mikromechanischen Beschleunigungssensor. Der mikromechanische Beschleunigungssensor 20 der Figur 1 ist in oder auf dem flexiblen Schaltungsträger 10 fest positioniert, so dass insbesondere ein Nachjustieren des mikromechanischen Beschleunigungssensors 20 nicht mehr erforderlich ist. Der mikromechanische Beschleunigungssensor 20 ist mit einer integrierten Leiterbahnstruktur 30 des flexiblen Schaltungsträgers 10 kontaktiert. Die integrierte Leiterbahnstruktur 30 des flexiblen Schaltungsträgers 10 umfasst insbesondere Leiterbahnen L1 sowie Kontaktierungsflächen F1. Die hier beschriebenen Kontaktierungsflächen F1 beziehungsweise Leiterbahnen L1 liegen nach dem Anordnen des mikromechanisches Beschleunigungssensors 20 und des flexiblen Schaltungsträgers 10 auf oder in dem Kunststoffbauteil 100 zumindest teilweise frei. So lässt sich ein Kontaktieren des mikromechanischen Beschleunigungssensors 20 mit einer Auswerteelektronik, insbesondere mit der Auswerteelektronik eines Fahrzeuges, einfach und kostengünstig durchführen.

Figur 2 ist eine schematische Querschnittsansicht zum Erläutern des Verfahrens zum Umspritzen einer Anzahl von mikromechanischen Beschleunigungssensoren und eines flexiblen Schaltungsträgers gemäß der Ausführungsform der vorliegenden Erfindung.

Figur 2 ist eine schematische Darstellung des mikromechanischen Beschleunigungssensors 20 und des flexiblen Schaltungsträgers 10 in einem Spritzgusswerkzeug W1. Der mikromechanische Beschleunigungssensor 20 und der flexible Schaltungsträger 10 werden vor einem zumindest bereichsweise Anordnen des mikromechanischen Beschleunigungssensors 20 und des flexiblen Schaltungsträgers 10 auf oder in das Kunststoffbauteil 100 zumindest bereichsweise durch mindestens ein Polymer 25, beispielsweise ein Duroplast, umspritzt. Das Umspritzen mit dem mindestens einen Material kann insbesondere durch ein Spritzgießen erfolgen. Beim Umspritzen des mikromechanischen Beschleunigungssensors 20 und des flexiblen Schaltungsträgers 10 können Bereiche des flexiblen Schaltungsträgers 10 und somit der integrierten Leiterbahnstruktur 30 zumindest bereichsweise frei von dem Polymer 25 sein. Hierdurch kann beispielsweise ein elektrisches Kontaktieren der integrierten Leiterbahnstruktur 30 des flexiblen Schaltungsträgers 10 nach dem zumindest bereichsweise Anordnen des mikromechanischen Beschleunigungssensors 20 und des flexiblen Schaltungsträgers 10 auf oder in das Kunststoffbauteil 100 einfach realisiert werden.

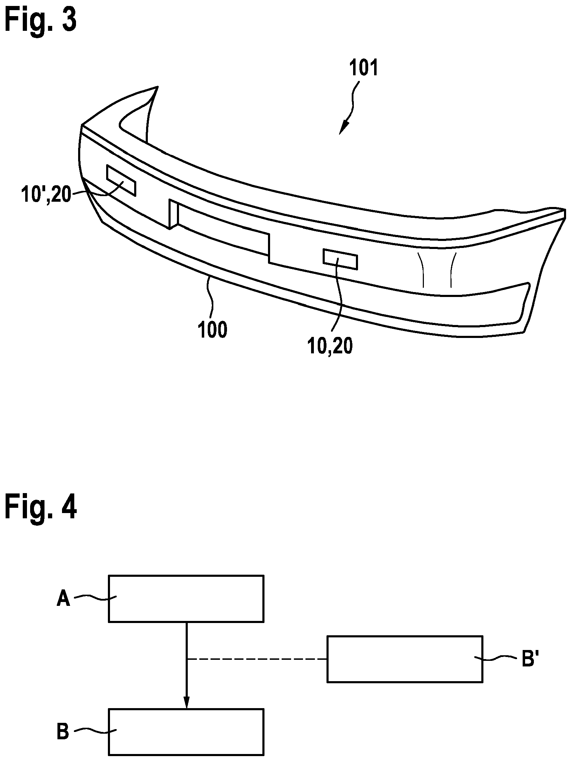

Figur 3 ist schematische Darstellung eines Stoßfängers zum Erläutern des Verfahrens gemäß einer weiteren Ausführungsform der vorliegenden Erfindung.

In Figur 3 bezeichnet Bezugszeichen 101 einen Stoßfänger mit der Anzahl von mikromechanischen Beschleunigungssensoren 20 und dem flexiblen Schaltungsträger 10 auf oder in dem Stoßfänger 101. Der mikromechanische Beschleunigungssensor 20 und der flexible Schaltungsträger 10 können beispielsweise mittels Liquid-Composite-Molding-Verfahren (LCM-Verfahren) in dem Stoßfänger 101 angeordnet sein. Alternativ können der mikromechanische Beschleunigungssensor 20 und der flexible Schaltungsträger 10' auf dem Stoßfänger 101 angeordnet sein. Die integrierte Leiterbahnstruktur 30 des flexiblen Schaltungsträgers 10 wird zumindest teilweise in dem Stoßfänger 101 freigelegt (hier nicht gezeigt). Ferner können Montagekosten durch einfaches Anordnen des flexiblen Schaltungsträgers 10 auf dem Stoßfänger 101 mittels Cliptechnik gesenkt werden.

Figur 4 ist Flussdiagramm zum Erläutern eines Verfahrens zum Anordnen der Anzahl von mikromechanischen Beschleunigungssensoren auf oder in das Kunststoffbauteil gemäß einer Ausführungsform der vorliegenden Erfindung. Im Schritt A des Verfahrens wird der mikromechanische Beschleunigungssensor 20 in oder auf einen flexiblen Schaltungsträger 10 fest positioniert, wobei der mikromechanische Beschleunigungssensor 20 mit einer integrierten Leiterbahnstruktur 30 des flexiblen Schaltungsträgers 10 kontaktiert wird. Im Schritt C des Verfahrens werden zumindest bereichsweise der mikromechanische Beschleunigungssensor 20 und der flexible Schaltungsträger 10 auf oder in das Kunststoffbauteil 100 derart angeordnet, dass die integrierte Leiterbahnstruktur 30 des flexiblen Schaltungsträgers 10 zumindest teilweise freigelegt wird. Vor dem Schritt C des Verfahrens werden der mikromechanische Beschleunigungssensor 20 und der flexible Schaltungsträger 10 zumindest bereichsweise durch mindestens ein Polymer 25 umspritzt (Schritt B des Verfahrens).

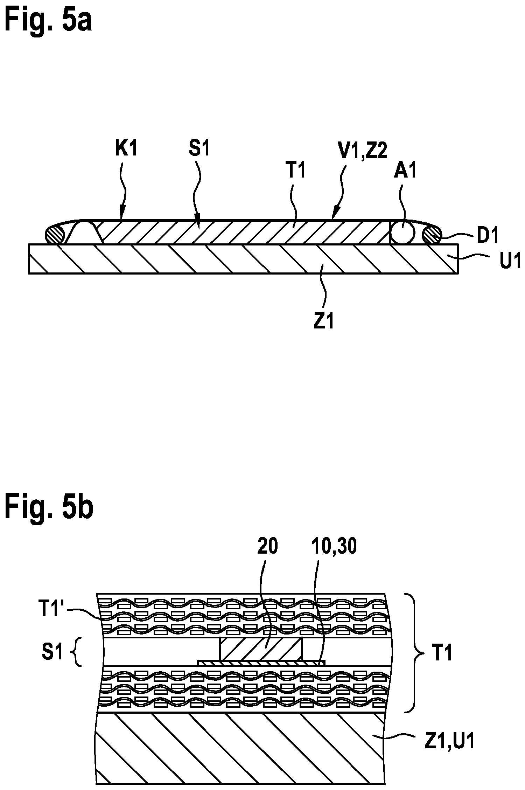

Figuren 5a und 5b sind schematische Darstellungen zum Erläutern eines Liquid-Composite-Molding-Verfahrens, insbesondere Vacuum Assisted Resin Infusion (VARI-Verfahren).

Bei der Vacuum Assisted Resin Infusion (kurz: VARI-Verfahren) erfolgt die Harzimprägnierung des textilen Lagenaufbaus T1 durch das Aufbringen eines Vakuums (Unterdruck) auf eine Kavität K1 (siehe Figur 5a). Ein Werkzeug Z1 für dieses Verfahren umfasst eine feste Unterform U1, wobei eine zweite Werkzeughälfte Z2 durch eine flexible harz- und gasdichte Folie V1 ersetzt wird.

Der Lagenaufbau T1 (Fasertextil, ggf. Einleger und Hilfsfolien) wird im trockenen Zustand auf dem einseitigen Werkzeug Z1, U1 abgelegt. Hierbei kann auch das direkte Einlegen des mit dem mikromechanischen Beschleunigungssensor 20 bestückten flexiblen Schaltungsträger 10 erfolgen. Ein zusätzliches Ausrichten und Positionieren ist insbesondere umsetzbar, indem zum Beispiel Positionierhilfen (zum Beispiel Anschläge) und Fixiervorrichtungen (zum Beispiel Klemmsysteme) außerhalb der Kavität K1 in die Unterform U1 integriert werden.

Die Enden des flexiblen Schaltungsträger 10 werden an zwei Enden aus der Kavität K1 herausgeführt und mittels der Positionierhilfe und der Fixierungsvorrichtung ausgerichtet sowie fixiert. Alternativ ist eine Vorabfixierung eines Foliensystems S1 mit dem mikromechanischen Beschleunigungssensor 20 und dem flexiblen Schaltungsträger 10 auf einer der Textillagen oder auf einem Prepreg durch Klebstoff oder Binder, oder ein Aufsticken oder -Weben auf einer Textillage T1' des Lagenaufbaus T1 anwendbar. Alternativ kann das die Textillage T1' entsprechend einer Geometrie des mikromechanischen Beschleunigungssensor 20 vorkonfektioniert und des Foliensystem S1 vorab in eine Aussparung des Lagenaufbau T1 eingelegt werden (siehe Figur 5b).

Der gesamte Aufbau wird mit der gasdichten Folie V1 und einem Dichtband D1 zu einem abgeschlossenen Raum verbunden und vor der Harzinfusion über eine Absaugung A1 evakuiert. Der Vorgang komprimiert zunächst den Lagenaufbau T1 und dient anschließend dazu, eine Druckdifferenz für einen Fließprozess des Harzes aufzubauen. Da die für die Harzinfusion benötigte Druckdifferenz beim VARI-Verfahren maximal 1 bar betragen kann, werden an die mechanische Stabilität des Werkzeugs weitestgehend keine hohen Anforderungen gestellt. Auch der Lagenaufbau T1 beziehungsweise die darin integrierten Komponenten (respektive das Foliensystem S1) werden dadurch nicht kritisch belastet. Die Temperaturen zur Infusion und Aushärtung können durch die Wahl des Harzsystems gezielt gewählt werden und liegen für Standard VARI- Harze zwischen Raumtemperatur und ca. 70 °C. Diese Parameter sind unkritisch für das integrierte Folien- bzw. Sensorsystem S1.

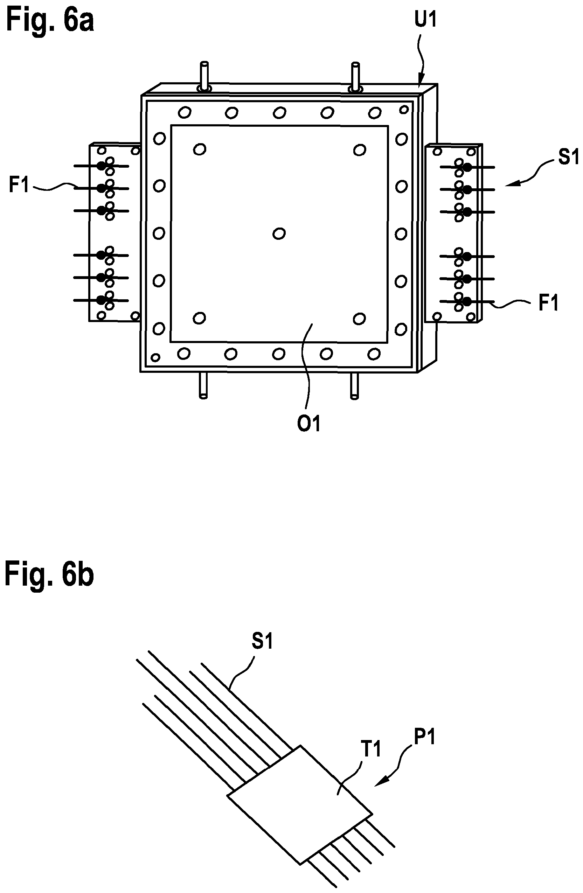

Figuren 6a, 6b sind schematische Darstellungen zum Erläutern einer speziellen Werkzeugtechnologie für ein LCM-Verfahren, insbesondere Resin Transfer Molding-Verfahrens (RTM-Verfahren), zum Einlegen eines Foliensystems zwischen Textillagen.

Figur 6a illustriert ein Werkzeugkonzept für das RTM-Verfahren mit Positionier-und Klemmsystemen zur Integration von insgesamt sechs Foliensystemen S1 in eine faserverstärkte Kunststoffplatte P1. Als alternatives serienfähiges Verfahren bietet sich das Resin Transfer Molding (kurz: RTM-Verfahren) an. Dabei wird das Harzsystem mittels Druckgefälle (Überdruck) in die Kavität K1 injiziert und der textile Lagenaufbau T1 inklusive der ggf. darin integrierten Komponenten 10, 20, 30 imprägniert. Es kommt ein zweiseitig steifes Werkzeug zum Einsatz, das nach dem Beschicken hermetisch verschlossen wird. Auch hier können zum Beispiel Positionierhilfen und Fixiersysteme F1 konstruktiv in die Unterform U1 integriert werden, um das Foliensystem S1 zusätzlich auszurichten und während der Harzinjektion zu fixieren. Wie oben beschrieben wird dazu ein Teil des eingelegten Foliensystems S1 an zwei Enden herausgeführt, ausgerichtet und fixiert. Alternativ ist auch hier die Vorabfixierung via Kleben, Aufsticken oder - weben sowie einer Vorkonfektionierung des Textils möglich. Mit dem Verschließen der Oberform O1 wird der Einleger zusätzlich abgedichtet.

Das Harz wird aus einem Drucktopf oder einer Druckanlage mit 3 bis 8 bar (in der Praxis meist 4 bis 6 bar) in das Werkzeug eingeleitet. Auch dieser Prozessparameter ist unkritisch für die integrierte Komponente (respektive das Foliensystem S1). RTM-Harze härten je nach System bei Raumtemperatur bis ca. 70°C aus, was das Foliensystem S1 nicht kritisch thermisch belastet. Die Zykluszeit für die Bauteilherstellung mittels RTM beträgt je nach Komplexität und Größe des Bauteils etwa 5 bis 25 min. Die Vernetzungszeit des Harzsystems ist dabei die dominierende Größe. Die Zykluszeit kann entsprechend durch die Verwendung spezieller schnellhärtender Harzsysteme sowie durch höhere Injektionsdrücke (sog. Hochdruck RTM, kurz: HD RTM) reduziert werden.

Figur 6b zeigt basierend auf der Figur 6a die faserverstärkte Kunststoffplatte P1 mit den sechs Foliensystemen S1.

Somit kann durch das hier beschriebene Verfahren ein Beschleunigungssensor insbesondere mit folienbasierter Spritzgießen bereitgestellt werden oder alternativ kann eine folienbasierte Integration des Foliensystems in ein faserverstärktes Kunststoffbauteil erfolgen. Ferner kann eine direkte Montagetechnik an dem Stoßfänger beispielsweise durch Flip-Technik durchgeführt werden, wodurch eine Integration von mechanischer und elektronischer Funktionalität in dem Stoßdämpfer gewährleistet werden kann. Ferner können auf oder in dem flexiblen Schaltungsträger, welcher als Folie ausgebildet sein kann, mehrere mikromechanische Beschleunigungssensoren kontaktiert sein.

Obwohl die vorliegende Erfindung anhand bevorzugter Ausführungsbeispiele beschrieben wurde, ist sie darauf nicht beschränkt. Insbesondere sind die genannten Materialien und Anordnungen nur beispielshaft und nicht auf die erläuterten Beispiele beschränkt.

## Patentansprüche

1. Verfahren zum Anordnen einer Anzahl von mikromechanischen Beschleunigungssensoren (20) auf oder in ein Kunststoffbauteil (100), insbesondere einem Stoßfänger (101), mit den Schritten:
A) festes Positionieren des jeweiligen mikromechanischen Beschleunigungssensors (20) in oder auf einen zugeordneten flexiblen Schaltungsträger (10), wobei der jeweilige mikromechanische Beschleunigungssensor (20) mit einer integrierten Leiterbahnstruktur (30) des zugeordneten flexiblen Schaltungsträgers (10) kontaktiert wird;
B) Umspritzen des jeweiligen mikromechanischen Beschleunigungssensors (20) und des zugeordneten flexiblen Schaltungsträgers (10) durch mindestens ein Polymer (25), wobei die integrierte Leiterbahnstruktur (30) zumindest bereichsweise frei von dem mindestens einen Polymer (25) bleibt,
C) zumindest bereichsweises Anordnen des jeweiligen mikromechanischen Beschleunigungssensors (20) und des zugeordneten flexiblen Schaltungsträgers (10) auf oder in das Kunststoffbauteil (100) derart, dass die integrierte Leiterbahnstruktur (30) des zugeordneten flexiblen Schaltungsträgers (10), welche frei von dem mindestens einen Polymer (25) ist, zumindest teilweise frei liegt für ein elektrisches Kontaktieren der integrierten Leiterbahnstruktur (30).

2. Verfahren nach einem der vorherigen Ansprüche, wobei das feste Positionieren des jeweiligen mikromechanischen Beschleunigungssensors (20) in oder auf den zugeordneten flexiblen Schaltungsträger durch Stecken, Löten, Kleben oder Flip-Chip-Montage durchgeführt wird.

3. Verfahren nach Anspruch 1, wobei der zugeordnete flexible Schaltungsträger (20) als Folie bereitgestellt wird.

4. Verfahren nach Anspruch 1, wobei das zumindest bereichsweise Anordnen des zugeordneten flexiblen Schaltungsträgers (10) in das Kunststoffbauteil (100) mittels Liquid-Composite-Molding-Verfahren (LCM-Verfahren) durchgeführt wird.

5. Verfahren nach Anspruch 4, wobei das Liquid-Composite-Molding-Verfahren mittels Vacuum Assisted Resin Infusion-Verfahren, VARI-Verfahren, durchgeführt wird.

6. Verfahren nach Anspruch 4, wobei das Liquid-Composite-Molding-Verfahren mittels Resin Transfer Molding-Verfahren, RTM-Verfahren, durchgeführt wird.

7. Kunststoffbauteil (100), insbesondere Stoßfänger (101), mit einer Anzahl mikromechanischer Beschleunigungssensoren (20), wobei der jeweilige mikromechanische Beschleunigungssensor (20) in oder auf eine integrierte Leiterbahnstruktur (30) eines zugeordneten flexiblen Schaltungsträgers (10) fest positioniert ist; wobei der jeweilige mikromechanische Beschleunigungssensor (20) und der zugeordnete flexible Schaltungsträger (10) durch mindestens ein ausgehärtetes Polymer (25) umspritzt sind, wobei die integrierte Leiterbahnstruktur (30) dabei zumindest bereichsweise frei von dem mindestens einen ausgehärteten Polymer (25) ist und wobei der jeweilige mikromechanische Beschleunigungssensor (20) und der zugeordnete flexible Schaltungsträger (10) auf oder in dem Kunststoffbauteil (100) zumindest bereichsweise derart angeordnet sind, dass die integrierte Leiterbahnstruktur (30) des zugeordneten flexiblen Schaltungsträgers (10), welche frei von dem mindestens einen ausgehärteten Polymer (25) ist, zumindest teilweise freiliegt.

8. Kunststoffbauteil (100) nach Anspruch 7, wobei der zugeordnete flexible Schaltungsträger (10) eine Folie ist.

9. Kunststoffbauteil (100) nach einem der Ansprüche 7 bis 8, wobei das Kunststoffbauteil (100) ein faserverstärktes Kunststoffbauteil ist.

## Claims

1. Method for arranging a number of micromechanical acceleration sensors (20) on or in a plastics component (100), in particular a bumper (101), comprising the following steps:
A) fixedly positioning the respective micromechanical acceleration sensor (20) in or on an assigned flexible circuit carrier (10), wherein the respective micromechanical acceleration sensor (20) is contacted with an integrated conductor track structure (30) of the assigned flexible circuit carrier (10);
B) moulding at least one polymer (25) around the respective micromechanical acceleration sensor (20) and the assigned flexible circuit carrier (10), wherein the integrated conductor track structure (30) at least regionally remains free of the at least one polymer (25),
C) at least regionally arranging the respective micromechanical acceleration sensor (20) and the assigned flexible circuit carrier (10) on or in the plastics component (100) in such a way that the integrated conductor track structure (30) of the assigned flexible circuit carrier (10) which is free of the at least one polymer (25) is at least partly exposed for electrical contacting of the integrated conductor track structure (30).

2. Method according to any of the preceding claims, wherein fixedly positioning the respective micromechanical acceleration sensor (20) in or on the assigned flexible circuit carrier is carried out by plugging, soldering, adhesive bonding or flip-chip mounting.

3. Method according to Claim 1, wherein the assigned flexible circuit carrier (20) is provided as a film.

4. Method according to Claim 1, wherein at least regionally arranging the assigned flexible circuit carrier (10) in the plastics component (100) is carried out by means of a liquid composite moulding method (LCM method).

5. Method according to Claim 4, wherein the liquid composite moulding method is carried out by means of a vacuum assisted resin infusion method, VARI method.

6. Method according to Claim 4, wherein the liquid composite moulding method is carried out by means of a resin transfer moulding method, RTM method.

7. Plastics component (100), in particular bumper (101), having a number of micromechanical acceleration sensors (20), wherein the respective micromechanical acceleration sensor (20) is fixedly positioned in or on an integrated conductor track structure (30) of an assigned flexible circuit carrier (10); wherein at least one cured polymer (25) is moulded around the respective micromechanical acceleration sensor (20) and the assigned flexible circuit carrier (10), wherein the integrated conductor track structure (30) in this case is at least regionally free of the at least one cured polymer (25) and wherein the respective micromechanical acceleration sensor (20) and the assigned flexible circuit carrier (10) are at least regionally arranged on or in the plastics component (100) in such a way that the integrated conductor track structure (30) of the assigned flexible circuit carrier (10) which is free of the at least one cured polymer (25) is at least partly exposed.

8. Plastics component (100) according to Claim 7, wherein the assigned flexible circuit carrier (10) is a film.

9. Plastics component (100) according to either of Claims 7 and 8, wherein the plastics component (100) is a fibre-reinforced plastics component.

## Revendications

1. Procédé permettant de disposer un certain nombre de capteurs d'accélération micromécaniques (20) sur ou dans une pièce en plastique (100), en particulier un pare-chocs (101), comprenant les étapes consistant à :
A) positionner fixement le capteur d'accélération micromécanique (20) respectif dans ou sur un support de circuit souple (10) associé, dans lequel le capteur d'accélération micromécanique (20) respectif est mis en contact avec une structure de pistes conductrices (30) intégrée du support de circuit souple (10) associé ;
B) surmouler le capteur d'accélération micromécanique (20) respectif et le support de circuit souple (10) associé avec au moins un polymère (25), dans lequel la structure de pistes conductrices (30) intégrée reste au moins par endroits exempte dudit au moins un polymère (25),
C) disposer au moins par endroits le capteur d'accélération micromécanique (20) respectif et le support de circuit souple (10) associé sur ou dans la pièce en plastique (100) de telle sorte que la structure de pistes conductrices (30) intégrée du support de circuit souple (10) associé qui est exempte dudit au moins un polymère (25) est exposée au moins partiellement pour une mise en contact électrique de la structure de pistes conductrices (30) intégrée.

2. Procédé selon selon l'une quelconque des revendications précédentes, dans lequel le positionnement fixe du capteur d'accélération micromécanique (20) respectif dans le support de circuit souple associé est effectué par insertion, soudage, collage ou montage de puce retournée.

3. Procédé selon la revendication 1, dans lequel le support de circuit souple (20) associé est fourni sous forme de film.

4. Procédé selon la revendication 1, dans lequel la disposition au moins par endroits du support de circuit souple (10) associé dans la pièce en plastique (100) est effectué au moyen d'un procédé de moulage de composites par injection et infusion (procédé LCM).

5. Procédé selon la revendication 4, dans lequel le procédé de moulage de composites par injection et infusion est effectué au moyen d'un procédé d'infusion de résine sous vide, procédé VARI.

6. Procédé selon la revendication 4, dans lequel le procédé de moulage de composites par injection et infusion est effectué au moyen d'un procédé de moulage par transfert de résine, procédé RTM.

7. Pièce en plastique (100), en particulier pare-chocs (101), comprenant un certain nombre de capteurs d'accélération micromécaniques (20), dans lequel le capteur d'accélération micromécanique (20) respectif est positionné fixement dans ou sur une structure de pistes conductrices (30) intégrée d'un support de circuit souple (10) associé; dans lequel le capteur d'accélération micromécanique (20) respectif et le support de circuit souple (10) associé sont surmoulés avec au moins un polymère (25) durci, dans lequel la structure de pistes conductrices (30) intégrée est au moins par endroits exempte dudit au moins un polymère durci (25), et dans lequel le capteur d'accélération micromécanique (20) respectif et le support de circuit souple (10) associé sont disposés sur ou dans la pièce en plastique (100) au moins par endroits de telle sorte que la structure de pistes conductrices (30) intégrée dudit au moins un support de circuit souple (10) associé qui est exempte dudit au moins un polymère durci (25) est exposée au moins partiellement.

8. Pièce en plastique (100) selon la revendication 7, dans lequel le support de circuit souple (10) associé est un film.

9. Pièce en plastique (100) selon l'une quelconque des revendications 7 à 8, dans lequel la pièce en plastique (100) est une pièce en plastique renforcée par des fibres.
